# EUROPÄISCHE PATENTSCHRIFT

(11) **EP 3 300 583 B1**
(45) Veröffentlichungstag und Bekanntmachung des Hinweises auf die Patenterteilung: **04.12.2019**
(21) Anmeldenummer: 17001102.7
(22) Anmeldetag: 28.06.2017
(51) Int. Cl.: A01D 67/00

(54) **SELBSTFAHRENDE ERNTEMASCHINE**
SELF-PROPELLED HARVESTER
MACHINE DE RÉCOLTE AUTOMOTRICE

(30) Priorität: 29.09.2016 DE 102016118558
(43) Veröffentlichungstag der Anmeldung: 04.04.2018
(73) Patentinhaber: CLAAS Selbstfahrende Erntemaschinen GmbH, 33428 Harsewinkel (DE)
(72) Erfinder: Speckamp, Dirk, 59073 Hamm (DE); Loeneke, Markus, 33142 Büren (DE); Sonderhüsken, Jürgen, 59071 Hamm (DE); Behra, Jan Philipp, 33332 Gütersloh (DE)
(74) Vertreter: CLAAS Gruppe

(56) Entgegenhaltungen:
- EP-A1- 2 022 315
- EP-A2- 1 375 229

## Beschreibung

Die vorllegende Erfindung betrifft eine selbstfahrende Erntemaschine gemäß dem Oberbegriff des Anspruches 1.

Mit zunehmender Leistungsfähigkeit von selbstfahrenden Erntemaschinen steigen die Anforderungen an deren Arbeitsaggregate, welche in der Regel größer dimensioniert werden müssen, woraus Bauraumprobleme entstehen. Damit einhergehend ist eine Gewichtszunahme der Erntemaschine zu verzeichnen. Um diesen Anforderungen gerecht zu werden, wird nach Ansätzen gesucht, welche einerseits eine bessere Achslastverteilung ermöglichen und andererseits mehr Bauraum für Arbeitsaggregate bereitstellen.

Aus der US 2006/0220331 A1 ist eine landwirtschaftliche Erntemaschine bekannt, welche eine Antriebsachse mit einem verkröpften Achskörper, sowie eine Lenkachse aufweist, wobei die Antriebsachse unterhalb eines zumindest ein Arbeitsaggregate der Erntemaschine zumindest abschnittsweise umgebenden Gehäuses angeordnet ist. Der Achskörper weist in vertikaler Richtung verlaufende u-förmige Streben auf, welche dazu dienen, einander gegenüberliegende Lagerbaugruppen aufzunehmen. Diese Lagerbaugruppen sind jeweils mit ihrem einen Endabschnitt mit dem Gehäuse verbunden. Mit dem anderen Endabschnitt sind diese in den u-förmigen Streben in der Weise gelagert, dass eine Querneigung der Erntemaschine durch ein Kippen der Antriebsachse relativ zu dem Gehäuse ausgeglichen wird, um das Gehäuse In einer waagerechten Position zu halten. Um die Kippbewegung zu ermöglichen sind Hydraulikzylinder vorgesehen, welche die jeweilige u-förmige Strebe mit der korrespondierenden Lagerbaugruppe verbinden. Das Gehäuse selbst ist auf einem Längsträger angeordnet, der oberhalb des Achskörpers angeordnet ist. Der Aufbau gemäß der US 2006/0220331 A1 ist auf eine konventionelle Erntemaschine ohne einen derartigen Hangausgleich nicht anwendbar, da dieser insbesondere die zusätzliche Beabstandung zwischen dem Achskörper und dem Gehäuse, die sich aufgrund der besonderen Anordnung und Lagerung der Antriebsachse einstellt, einer solchen Erntemaschine im Allgemeinen die im Straßenverkehr zulässige Maximalhöhe überschreiten ließe.

Die Druckschrift EP 1 375 229 A2 beschreibt eine Fahrzeugachse beispielsweise für selbstfahrende Erntemaschinen wie Mähdrescher. Die Radgetriebe sind im unmittelbaren Bereich unterhalb der Verbindungsstellen der Antriebsachse zum Maschinenrahmen angeordnet.

Aufgabe der vorliegenden Erfindung ist es daher, eine Erntemaschine der eingangs genannten Art weiterzuentwickeln, die sich durch eine verbesserte Bauraumausnutzung im Antriebsachsbereich auszeichnet.

Diese Aufgabe wird erfindungsgemäß durch die Merkmale des Anspruches 1 gelöst. Vorteilhafte Weiterbildungen der Erfindung sind Gegenstand der Unteransprüche.

Gemäß dem Anspruch 1 wird eine selbstfahrende Erntemaschine, umfassend eine Antriebsachse mit einem verkröpften Achskörper, sowie eine Lenkachse, wobei die Antriebsachse unterhalb eines zumindest ein Arbeitsaggregat der Erntemaschine zumindest abschnittsweise umgebenden Gehäuses angeordnet ist, vorgeschlagen. Unter Verkröpfung wird eine Einbuchtung des Achskörpers in dessen mittlerem Bereich verstanden, das heißt auf einer sich senkrecht erstreckenden Seite des Achskörpers weist dieser eine gegenüber den Endbereichen zurückversetzten Mittenbereich auf. Zur Verbesserung der Bauraumausnutzung im Antriebsachsbereich ist vorgesehen, dass an dem Achskörper sich in Längsrichtung der Erntemaschine erstreckende, eine Auflagefläche aufweisende, Längsträger angeordnet sind, auf deren Auflagefläche das Gehäuse abschnittsweise aufliegt, und dass das Gehäuse mit den in Fahrtrichtung weisenden Enden der Längsträger nahezu bündig abschließt, wobei an dem jeweiligen Längsträger jeweils ein sich vertikal zur Auflagefläche erstreckender Halteabschnitt angeordnet ist, an welchem das Gehäuse abschnittsweise anliegt. Die Halteabschnitte dienen einerseits der Befestigung des Gehäuses an dem Achskörper und andererseits als Montagehilfe. Bei dem Aufsetzen des Gehäuses auf den Achskörper unterstützen diese Halteabschnitte die bündige Ausrichtung gegenüber dem Achskörper beziehungsweise dessen Querstreben. Diese Ausgestaltung des Achskörpers der Antriebsachse hat gegenüber dem aus dem Stand der Technik bekannten Aufbau den Vorteil, dass der Achskörper eine höhere Traglast aufweist, welche für eine zunehmend größere Dimensionierung der Arbeitsaggregate zur Leistungssteigerung der Erntemaschine erforderlich ist. Dabei kann der Achskörper gebaut sein, das heißt der Achskörper Ist als Hohlkörper ausgeführt, setzt sich aber aus mehreren separaten Bauteilen zusammen. Hierzu können verschiedene gelaserte und/oder gestanzte Bleche miteinander verschweißt werden. Dieser Aufbau aus einzelnen Bauteilen ermöglicht eine kraftflussoptimierte Ausgestaltung des Achskörpers. Für die Kraftflussoptimlerung im Achskörper können insbesondere im Bereich der Winkel jeweils Verstärkungebleche im Inneren des als Hohlkörpers ausgebildeten Achskörpers vorgesehen sein. Diese Fertigung ermöglicht eine Gewichtsoptimierung, z. B. durch eine Variation der verbauten Blechstärken.

Vorteilhaft ist es, wenn die Erntemaschine Antriebskomponenten umfasst, welche zumindest abschnittsweise in die Verkröpfung des Achskörpers hinein verlagert sind. Hiermit lässt sich eine Bautiefe einsparende Anordnung realisieren.

Weiterhin können die Antriebskomponenten zwei Hydraulikmotoren umfassen. Das Vorsehen zweier kleiner Hydraulikmotoren anstelle eines großen Hydraulikmotors trägt ebenfalls zu einer Einsparung der Bautiefe bei.

In vorteilhafter Weiterbildung kann vorgesehen sein, dass an einer Stirnfläche des Achskörpers ein Schaltgetriebe, zwei Hydraulikmotoren und ein Differential mit zwei Abtriebswellen angeordnet sind, wobei die Anordnung dieser Antriebskomponenten derart gewählt ist, dass In Fahrrichtung gesehen zunächst das Differential mit den belden Abtriebswelle und daran ansohließend das Schaltgetriebe und die beiden Hydraulikmotoren angeordnet sind. Diese Anordnung ist vorteilhaft sowohl bei einer Ausgestaltung der Erntemaschine als Radmaschine als auch als Raupenmaschine. Diese Anordnung schafft mehr Bauraum für unterhalb des Gehäuses liegende Arbeitsaggregate. Im Fall einer beispielsweise als Mähdrescher ausgeführten Erntemaschine könnte das Arbeitsaggregat ein Reinigungsgebläse einer Reinigungsvorrichtung sein, welches näher an die Antriebsachse herangerückt werden könnte, wodurch für die weiteren Komponenten der Reinigungsvorrichtung, insbesondere Ober- und Untersieb, mehr Bauraum im rückwärtigen Bereich des Mähdreschers zur Verfügung stünde, um beispielsweise die Slebflächen zu vergrößern.

Insbesondere kann die Erntemaschine als eine Radmaschine ausgebildet sein, wobei das Schaltgetriebe der in Fahrtrichtung weisenden Stirnfläche des Achskörpers zugeordnet ist. Die Anordnung des Differentials und des Schaltgetriebes erfolgt an der Vorderseite des Achskörpers. Dabei schließt sich das Schaltgetriebe, In Fahrtrichtung gesehen, an das Differential an. Bei dieser Reihenfolge der Anordnung ist es vorteilhaft, dass die Zugänglichkeit zu dem Schaltgetriebe deutlich verbessert wird, da es einen größeren Abstand zum Aohskörper aufweist. Dadurch Ist eine Reinigung des Schaltgetrlebes und der daran angeordneten Komponenten einfacher, ebenso wie die Durchführung von Wartungs- und Reparaturarbeiten.

Hierbei können die von dem Differential zu belden Selten der Antriebsachse ausgehenden Abtriebswellen jeweils mit einem verkröpft angeordneten Radgetriebe verbunden sein. Insbesondere sind die Radgetriebe In vertikaler Richtung gegenüber dem Achskörper verkröpft, das heißt die Längsmittelachse des Achskörpers und die Längsmittelachse des Radgetriebes sind zueinander in vertikaler Richtung versetzt angeordnet. Diese verkröpfte Anordnung der Radgetriebe hat den Vorteil, dass sich der Radmittelpunkt entsprechend in seiner Höhe verlagert, der Abstand zum Boden vergrößert wird. Dadurch kann eine Bereifung mit einem größeren Außendurchmesser, insbesondere unter Einhaltung einer vorgeschriebenen Gesamthöhe der Erntemaschine, montiert werden. Somit können höhere Achslasten der Erntemaschine dargestellt werden. Zudem weist eine größere Bereifung eine größere Aufstandsfläche auf, was sich positiv auf die Bodenverdichtung auswirkt.

Vorteilhaft Ist es, wenn die Jeweilige Abtriebswelle in einem Bereich unterhalb eines Radmittelpunktes in das Radgetriebe mündet. Der mittels der Abtriebswellen zu überbrückende Höhenversatz zwischen dem Differential und dem Radgetriebe lässt sich somit reduzieren. Dies ermöglicht die Anordnung des Schaltgetriebes und des Differentials auf im Wesentlichen einer Ebene mit dem Achskörper.

Hierbei kann die jeweilige Abtriebswelle innerhalb eines kreissegmentförmigen Berelchs unterhalb des Radmittelpunktes In das Radgetriebe münden. Dabei ist vorgesehen, dass die Abtriebswelle und der Radmittelpunkt in einer Ansicht von oben etwa übereinander liegend angeordnet sind, während in einer Ansicht von der Seite die Abtriebswelle und der Radmittelpunkt versetzt zueinander angeordnet sind.

Hierzu kann der Achskörper als ein Hohlkörper ausgebildet sein, der abschnittsweise einen Im Wesentlichen bogenförmigen Verlauf aufweist. Der als Hohlkörper ausgebildete Achskörper kann aus verschiedenen gelaserten oder gestanzten Blechen bestehen.

Des Weiteren kann die Erntemaschine als Raupenmaschine ausgebildet sein, wobei das Schaltgetriebe der der Fahrtrichtung abgewandten Stirnfläche des Achskörpers zugeordnet ist. An dem der Fahrtrichtung abgewandten Bereich des gekröpften Achskörpers Ist das Schaltgetriebe mit den beiden Hydraulikmotoren angeordnet. An das Schaltgetriebe schließt sich das Differential mit seinen Abtriebswellen an. Bei dieser Reihenfolge der Anordnung sind die Hydraulikmotoren in Fahrtrichtung gesehen vor den Abtriebswellen bzw. dem Differential angeordnet. Hierdurch bildet sich ein Antriebsstrang aus, bei dem der Abstand zu dem angetriebenen Triebrad vergrößert wird. Aufgrund der u-förmigen Ausgestaltung des Achskörpers verläuft der gesamte Antriebsstrang nun bei einer Betrachtung gegen die Fahrtrichtung von einem benachbart angeordneten Arbeitsaggregat, im Fall des Mähdreschers der Reinigungsvorrichtung, weg. Dadurch wird Bauraum für das Arbeitsaggregat, wie beispielsweise die Reinigungsvorrichtung, geschaffen.

Vorteilhaft ist es, wenn die in Fahrtrichtung weisende Stirnfläche des Achskörpers mit der Vorderseite des Gehäuses im Wesentlichen bündig abschließend angeordnet ist. Durch die Anordnung des quer zur Erntemaschine verlaufenden Achskörpers etwa bündig unterhalb des Gehäuses stützt der Achskörper das Gehäuse zusätzlich ab. Dies ermöglicht eine höhere Traglast des von dem Gehäuse abschnittsweise umgebenen, beispielsweise als Dreschwerk ausgeführten, Arbeitsaggregates und/oder eines an der Erntemaschine vorgesehenen Behältnisses zur Aufnahme von Erntegut, wie einem Korntank.

Insbesondere kann der Achskörper als ein Hohlkörper ausgebildet sein, der einen im Wesentlichen u-förmigen Verlauf aufweist. Aufgrund der u-förmigen Ausgestaltung des Achskörpers verläuft der gesamte Antriebsstrang des Raupenlaufwerkes nun bel einer Betrachtung gegen die Fahrtrichtung der Erntemaschine von einem benachbart angeordneten Arbeltsaggregat, im Fall des Mähdreschers einer Reinigungsvorrichtung, weg. Dadurch wird zusätzlicher Bauraum für das Arbeitsaggregat, wie die Reinigungsvorrichtung, geschaffen.

Gemäß einer bevorzugten Weiterbildung kann der Achskörper als ein Hohlkörper ausgebildet sein, der abschnittsweise einen im Wesentlichen bogenförmigen oder bananenförmlgen Verlauf aufweist.

Weiterhin kann der Achskörper kraftflussoptimiert ausgeführt sein. Für die Kraftflussoptimierung sind Insbesondere Im Bereich der Winkel jeweils Verstärkungsbleche Im als Achskörper der Antriebsachse ausgebildeten Hohlkörper vorgesehen. Diese Fertigung ermöglicht auch eine Gewichtsoptimierung, z. B. durch Variation der Blechstärken.

Die vorliegende Erfindung wird nachstehend anhand von in den Zeichnungen dargestellten Ausführungsbelsplelen näher erläutert.

Es zeigen:
- Fig. 1: eine Draufsicht auf eine Antriebsachse einer als Radmaschine ausgeführten Erntemaschine;
- Fig. 2: eine perspektivische Ansicht der Antriebsachse gemäß Fig. 1;
- Fig. 3: eine perspektivische Ansicht eines Gehäuses einer Erntemaschine mit einer daran angeordneter Antriebsachse gemäß Fig. 1;
- Fig. 4: eine Draufsicht auf eine Antriebsachse einer als Raupenmaschine ausgeführten Erntemaschine;
- Flg. 5: eine perspektivische Ansicht eines Gehäuses einer Erntemasohine mit einer daran angeordneten Antriebsachse gemäß Fig. 4.

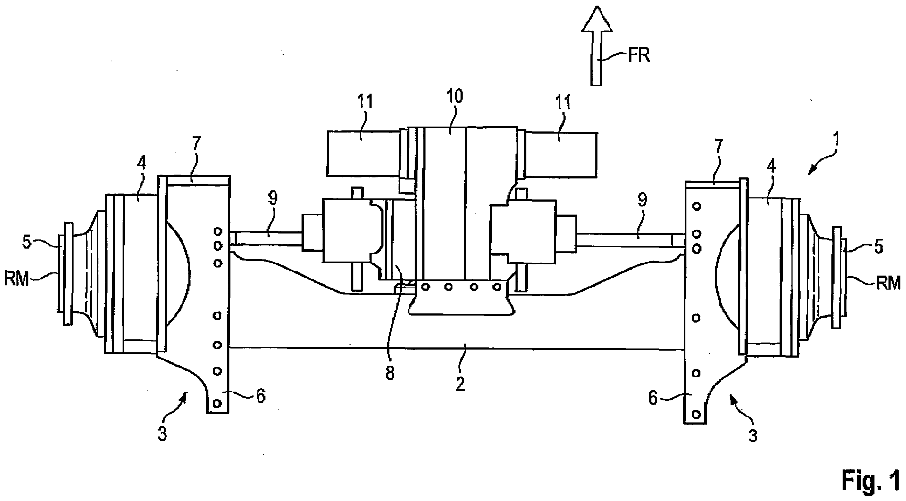

Die Darstellung in Fig. 1 zeigt eine Draufsicht auf eine Antriebsachse 1 einer als Radmaschine ausgeführten Erntemaschine. Bei der Erntemaschine handelt es sich um einen Mähdrescher. Die Antriebsachse 1 umfasst einen verkröpften, quer zur Längsachse der Erntemaschine verlaufenden, Achskörper 2 an dem endseitig sich parallel zur Längsachse der Erntemaschine erstreckende Längsträger 3 angeordnet sind. An die Längsträger 3 schließen sich nach außen weisende Radgetriebe 4 an. Das jeweilige Radgetriebe 4 weist eine Radnabe 5 mit einem Radmittelpunkt RM auf, welche der Anbringung eines auf einer Felge montierten Reifens dient. Ein Pfeil FR kennzeichnet die Fahrtrichtung der Erntemaschine bei der Erntefahrt beziehungsweise bei einer Vorwärtsfahrt auf der Straße. Jeder Längsträger 3 weist eine Auflagefläche 6 auf. An dem jewelligen Längsträger 3 ist an seinem In Fahrrichtung FR weisenden Ende jeweils ein sich vertikal zu der Auflagefläche 6 erstreckender Halteabschnitt 7 angeordnet.

An dem der Fahrtrichtung FR zugewandten gekröpften Bereich des Achskörpers 2 ist ein Differential 8 mit Abtriebswellen 9 angeordnet. Die jeweilige Abtriebswelle 9 mündet In das an dem jeweiligen Längsträger 3 benachbart angeordnete Radgetriebe 4. An das Differential 8 schließt sich ein Schaltgetriebe 10 an. Dem Schaltgetriebe 10 sind zwei Hydraulikmotoren 11 als hydrostatischer Fahrantrieb zugeordnet. Dabei schließt sich das Schaltgetriebe 10, in Fahrtrichtung FR gesehen, an das Differential 8 an. Bei dieser Reihenfolge der Anordnung ist es vorteilhaft, dass die Zugänglichkeit zu dem Schaltgetriebe 10 deutlich verbessert wird, da es einen größeren Abstand zu dem Achskörper 2 aufweist. Diese Antriebskomponenten, u.a, Differential 8, Schaltgetriebe 10 sowie die Hydraulikmotoren 11, sind in die bogen- bzw. bananenförmige Verkröpfung hinein verlagert, was zu einer Reduzierung der Bautlefe führt.

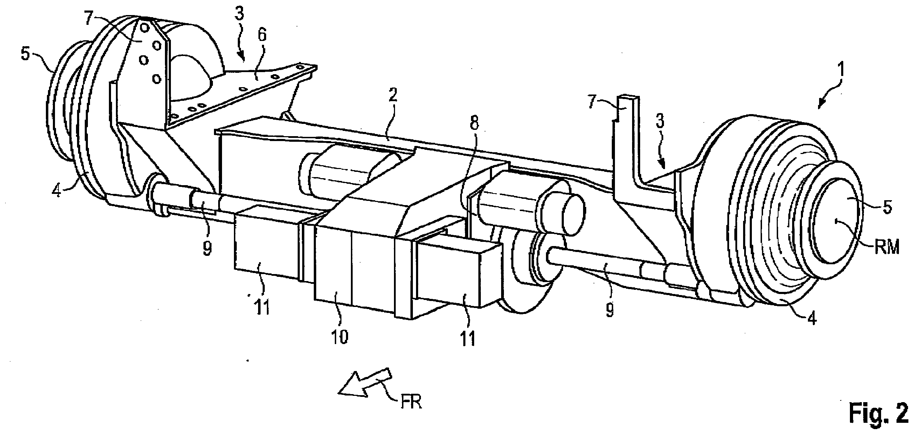

In der Darstellung gemäß Fig. 2 ist eine perspektivische Ansicht der Antriebsachse 1 gemäß Fig. 1 gezeigt. Gut zu erkennen sind die Verkröpfung des Achskörpers 2 und die hierdurch begünstigte Anordnung des Differentials 8 und des Schaltgetriebes 10. Der Achskörper 2 weist einen abschnittsweise bogenförmigen oder bananenförmigen Verlauf auf. Aus dieser Darstellung Ist die Anordnung der Abtriebswellen 9 zwischen dem Differential 8 und dem Radgetriebe 4 besser ersichtlich. Ebenso Ist aus der Darstellung in Flg. 2 ersichtlich, dass die Radgetriebe 4 in vertikaler Richtung gegenüber dem Achskörper 2 verkröpft angeordnet Ist, das heißt einen Höhenversatz aufweisen. Diese verkröpfte Anordnung der Radgetriebe 4 hat den Vorteil, dass sich der Radmittelpunkt RM respektive der Mittelpunkt der Radnabe 5 entsprechend in seiner Höhe verlagert, so dass der Abstand zum Boden vergrößert wird. Damit lassen sich höhere Achslasten der Erntemaschine darstellen. Zudem kann eine Bereifung mit einem größeren Außendurchmesser montiert werden, welche wiederum eine größere Aufstandsfläche aufweist, was sich positiv auf die Bodenverdichtung auswirkt.

Die jeweilige Abtriebswelle 9 mündet dabei In einen Bereich unterhalb des Radmittelpunktes RM in das korrespondierende Radgetriebe 4. Der Bereich, an dem die Abtriebswelle 9 in das Radgetriebe 4 mündet, lässt sich durch die gedankliche Projektion eines Zifferblattes einer Uhr auf die Oberfläche des Radgetriebe charakterisieren. Hieraus folgt eine Anordnung der Abtriebswelle 9 an dem Radgetriebe 4 In einem Bereich zwischen 16:00 Uhr und 18:00 Uhr. Denkbar ist auch eine Anordnung zwischen 18:00 Uhr und 20:00 Uhr.

Hierbei mündet die jeweilige Abtriebswelle 9 innerhalb eines kreissegmentförmigen Bereichs unterhalb des Radmittelpunktes RM in das Radgetriebe 4. Dabei ist vorgesehen, dass die Abtriebswelle 9 und der Radmittelpunkt RM gemäß der in Fig. 1 dargestellten Draufsicht etwa übereinander liegend angeordnet sind, während in der perspektivischen Ansicht gemäß der Fig. 2 die Abtriebswelle 9 und der Radmittelpunkt RM versetzt zueinander angeordnet sind. Der mittels der Abtriebswellen 9 zu überbrückende Höhenversatz zwischen dem Differential 8 und dem Radgetriebe 4 lässt sich durch diese Anordnung reduzieren. Dies ermöglicht die Anordnung des Schaltgetriebes 10 und des Differentials 8 auf im Wesentlichen einer horizontalen Ebene mit dem Achskörper 2.

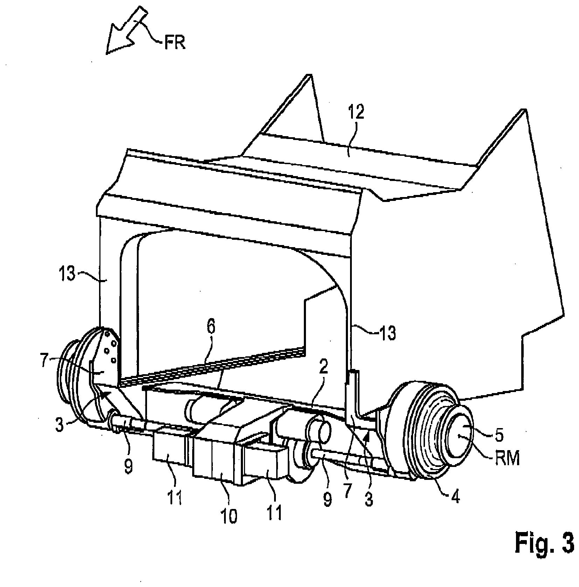

Fig. 3 zeigt die Darstellung eine perspektivische Ansicht eines Gehäuses 12 der Erntemaschine mit einer daran angeordneter Antriebsachse 1 gemäß Fig. 1. Die Antriebsachse 1 ist unterhalb des zumindest ein Arbeltsaggregat der Erntemaschine zumindest abschnittsweise umgebenden Gehäuses 12 angeordnet. In dem Beispiel der als Mähdrescher ausgeführten Erntemaschine handelt es sich bei dem Gehäuse 12 um das so genannte Trommelhaus, In welchem ein als (nicht dargestellte) Drescheinrichtung ausgeführtes Arbeitsaggregat des Mähdreschers angeordnet ist. Das Gehäuse 12 weist einen Im Wesentlichen u-förmigen Querschnitt auf und erstreckt sich abschnittsweise in Längsrichtung der Erntemaschine. Vertikale Seitenwände 13 des Gehäuses 12 stehen abschnittsweise auf den Auflageflächen 6 der Längsträger 3 auf. Die vertikalen Seitenwände 13 schließen nahezu bündig mit den In Fahrtrichtung FR weisenden Enden der Längsträger 3 ab. Um das Gehäuse 12 zusätzlich zu fixieren, sind die vertikalen Seitenwände 13 mit den sich vertikal zu der Auflagefläche 6 erstreckenden Halteabschnitten 7 durch lösbare Verbindungsmittel, insbesondere Schraubverbindungen, miteinander verbunden. Zudem dienen die Halteabschnitte 7 als Montagehilfen.

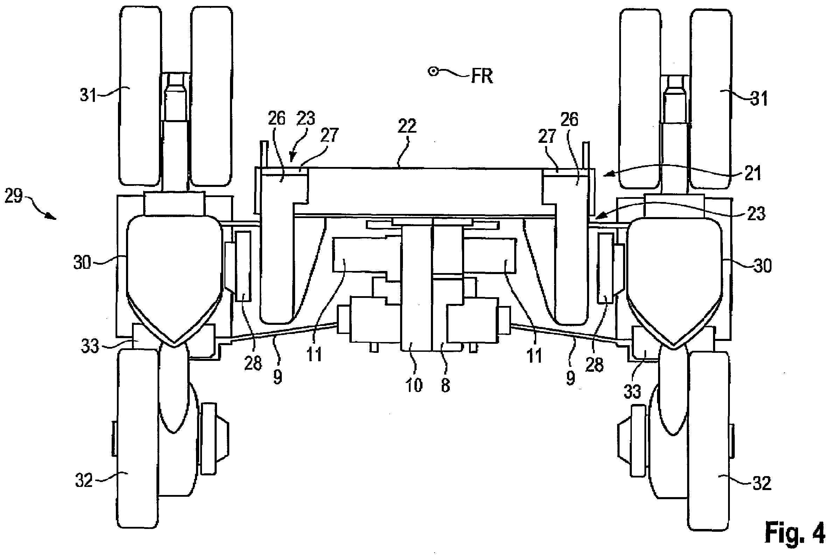

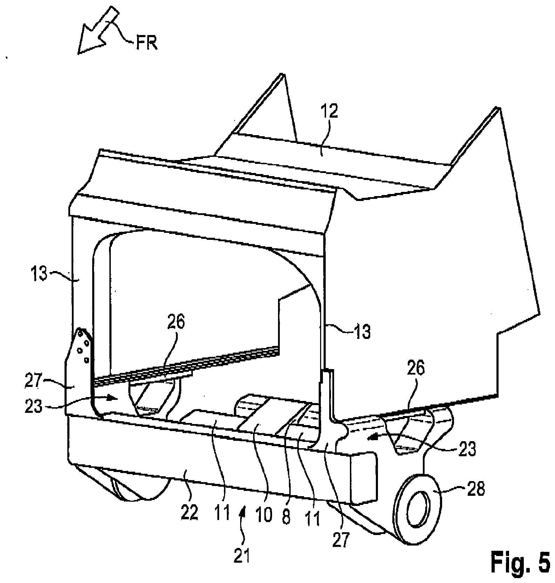

In Fig. 4 eine Draufsicht auf eine Antriebsachse 21 einer als Raupenmaschine ausgeführten Erntemaschine dargestellt. Fig. 5 zeigt eine Darstellung einer perspektivischen Ansicht eines Gehäuses 12 einer Erntemaschine mit einer daran angeordneter Antriebsachse 21 gemäß Fig. 4. Die Antriebsachse 1 umfasst elnen verkröpften Achskörper 22, der im Wesentlichen u-förmig ausgebildet ist. Dabel bilden beidseitig des querverlaufenden Achskörpers 22 angeordnete Längsträger 23 die zueinander parallelen, In Längsrichtung der Erntemaschine weisenden Schenkel. An den Jeweiligen Längsträger 23 schließt sich Jeweils ein an einem Flansch 28 angeordnetes Raupenlaufwerk 29 an. Das Jeweilige Raupenlaufwerk 29 umfasst einen Rahmen 30, ein im vorderen Bereich des Raupenlaufwerks 29 angeordnetes Laufrad 31, ein im hinteren Bereich des Raupenlaufwerks 29 angeordnetes Triebrad 32, ein Getriebe 33 sowie ein nicht dargestelltes, endlos umlaufendes, Laufband. Das Triebrad 32 Ist trieblich mit dem Getriebe 33 verbunden.

Jeder Längsträger 23 weist eine Auflagefläche 26 auf. An dem Jeweiligen Längsträger 23 ist an seinem in Fahrrichtung FR weisenden Ende jeweils ein sich vertikal zu der Auflagefläche 26 erstreckender Halteabschnitt 27 angeordnet. An dem der Fahrtrichtung FR abgewandten Bereich des gekröpften Achskörpers 22 ist das Schaltgetriebe 10 mit den beiden Hydraulikmotoren 11 angeordnet. An das Schaltgetriebe 10 schließt sich das Differential 8 mit seinen Abtriebswellen 9 an. Die jeweilige Abtriebswelle 9 mündet in das benachbarte Getriebe 33 des jeweillgen Raupenlaufwerkes 29. Bei dieser Reihenfolge der Anordnung sind die Hydraulikmotoren 11 in Fahrtrichtung FR gesehen vor den Abtriebswellen 9 bzw. dem Differential 8 angeordnet. Hierdurch bildet sich ein Antriebsstrang aus, bei dem durch Jeden Zahneingriff der Abstand zu dem angetrieben Triebrad 32 vergrößert wird. Aufgrund der u-förmigen Ausgestaltung des Achskörpers 22 verläuft der gesamte Antriebsstrang nun bel einer Betrachtung gegen die Fahrtrichtung FR von einem benachbart angeordneten Arbeltsaggregat, im Fall des Mähdreschers der Reinigungsvorrichtung, weg. Dadurch wird Bauraum für die Reinigungsvorrichtung geschaffen. Diese Antriebskomponenten, u.a. Differential 8, Schaltgetriebe 10 sowie die Hydraulikmotoren 11, sind in die im Wesentlichen u-förmige Verkröpfung hinein verlagert, was zu einer Reduzierung der Bautiefe führt.

Fig. 5 zeigt die Darstellung eine perspektivische Ansicht des Gehäuses 12 der Erntemaschine mit der daran angeordneten Antriebsachse 21 gemäß Fig. 4. Die Antriebsachse 21 ist unterhalb des zumindest ein Arbeitsaggregat der Erntemaschine zumindest abschnittsweise umgebenden Gehäuses 12 angeordnet, welches als Trommelhaus ausgeführt ist. Das Gehäuse 12 weist einen Im Wesentlichen u-förmigen Querschnitt auf und erstreckt sich abschnittsweise in Längsrichtung der Erntemaschine. Die vertikalen Seltenwände 13 des Gehäuses 12 stehen abschnittsweise auf den Auflageflächen 26 des jeweiligen Längsträgers 23 auf. Die vertikalen Seitenwände 13 schließen nahezu bündig mit dem in Fahrtrichtung FR weisenden Enden der Längsträger 23 ab. Um das Gehäuse 12 zusätzlich zu fixieren, sind die vertikalen Seitenwände 13 mit den sich vertikal zu der Auflagefläche 26 erstreckenden Halteabschnitten 27 durch lösbare Verbindungsmittel, insbesondere Sohraubverbindungen, miteinander verbunden. Zudem dienen die Halteabschnitte 27 als Montagehilfen. Im Unterschied zu der Ausführung der Antriebsachse 1 für eine Radmaschine ist vorgesehen, dass der unterhalb des Gehäuses 12 angeordnete Achskörper 22 der Antriebsachse 21 für eine Raupenmaschine etwa bündig mit der Vorderseite des Gehäuses 12 abschließend angeordnet ist. Durch die Anordnung des quer zur Erntemaschine verlaufenden Achskörpers 22 etwa bündig unterhalb des Gehäuses 12 stützt der Achskörper 22 das Gehäuse 12. Dies ermöglicht eine höhere Traglast des als Dreschwerk ausgeführten Arbeitsaggregates und/oder eines an der Erntemaschine vorgesehenen Behältnisses zur Aufnahme von Erntegut, wie einem Korntank. Die etwa bündige Anordnung des Achskörpers unterhalb des Gehäuses reduziert das Spannungsniveau.

### Bezugszeichenliste

- 1: Antriebsachse
- 2: Achskörper
- 3: Längsträger
- 4: Radgetriebe
- 5: Radnabe
- 6: Auflagefläche
- 7: Halteabschnitt
- 8: Differential
- 9: Abtriebswelle
- 10: Schaltgetriebe
- 11: Hydraulikmotor
- 12: Gehäuse
- 13: Seitenwand
- 21: Antriebsachse
- 22: Achskörper
- 23: Längsträger
- 26: Auflagefläche
- 27: Halteabschnitt
- 28: Flansch
- 29: Raupenlaufwerk
- 30: Rahmen
- 31: Laufrad
- 32: Triebrad
- 33: Getriebe

- RM: Radmittelpunkt
- FR: Fahrtrichtung

## Patentansprüche

1. Selbstfahrende Erntemaschine, umfassend eine Antriebsachse (1, 21) sowie eine Lenkachse, wobei die Antriebsachse (1, 21) unterhalb eines zumindest ein Arbeitsaggregate der Erntemaschine zumindest abschnittsweise umgebenden Gehäuses (12) angeordnet ist, wobei an dem Achskörper (2) sich in Längsrichtung der Erntemaschine erstreckende, eine Auflagefläche (6, 26) aufweisende, Längsträger (3, 23) angeordnet sind, auf deren Auflagefläche (6, 26) das Gehäuse (12) abschnittsweise aufliegt, und dass das Gehäuse (12) mit den in Fahrtrichtung weisenden Enden der Längsträger (3, 23) nahezu bündig abschließt, **dadurch gekennzeichnet, dass** an dem jeweiligen Längsträger (3, 23) jeweils ein sich vertikal zur Auflagefläche (6, 26) erstreckender Halteabschnitt (7, 27) angeordnet ist, an welchem das Gehäuse (12) abschnittsweise anliegt und die Antriebsachse (1, 21) einem verkröpften Achskörper (2, 22) aufweist.

2. Selbstfahrende Erntemaschine nach Anspruch 1, **dadurch gekennzeichnet, dass** die Erntemaschine Antriebskomponenten umfasst, welche zumindest abschnittsweise in die Verkröpfung des Achskörpers (2, 22) hinein verlagert sind.

3. Selbstfahrende Erntemaschine nach einem der vorherigen Ansprüche, **dadurch gekennzeichnet, dass** die Antriebskomponenten zwei Hydraulikmotoren (11) umfassen.

4. Selbstfahrende Erntemaschine nach einem der vorherigen Ansprüche, **dadurch gekennzeichnet, dass** an einer Stirnfläche des Achskörpers (2, 22) ein Schaltgetriebe (10), zwei Hydraulikmotoren (11) und ein Differential (8) mit zwei Abtriebswellen (9) angeordnet ist, wobei die Anordnung dieser Antriebskomponenten derart gewählt ist, dass in Fahrrichtung gesehen zunächst das Differential (8) mit den beiden Abtriebswellen (9) und daran anschließend das Schaltgetriebe (10) und die beiden Hydraulikmotoren (11) angeordnet sind.

5. Selbstfahrende Erntemaschine nach einem der vorherigen Ansprüche, **dadurch gekennzeichnet, dass** die Erntemaschine als eine Radmaschine ausgebildet ist, wobei das Schaltgetriebe (10) der in Fahrtrichtung weisenden Stirnfläche des Achskörpers (2 ,22) zugeordnet ist.

6. Selbstfahrende Erntemaschine nach einem der vorherigen Ansprüche, **dadurch gekennzeichnet, dass** die von dem Differential (8) zu beiden Seiten der Antriebsachse (1) ausgehenden Abtriebswellen (9) jeweils mit einem verkröpft angeordneten Radgetriebe (4) verbunden sind.

7. Selbstfahrende Erntemaschine nach einem der vorherigen Ansprüche, **dadurch gekennzeichnet, dass** die jeweilige Abtriebswelle (9) in einem Bereich unterhalb eines Radmittelpunktes (RM) in das Radgetriebe (4) mündet.

8. Selbstfahrende Erntemaschine nach einem der vorherigen Ansprüche, **dadurch gekennzeichnet, dass** die jeweilige Eingangswelle innerhalb eines kreissegmentförmigen Bereichs unterhalb des Radmittelpunktes (RM) in das Radgetriebe (4) mündet.

9. Selbstfahrende Erntemaschine nach einem der vorherigen Ansprüche, **dadurch gekennzeichnet, dass** der Achskörper (2) als ein Hohlkörper ausgebildet ist, der abschnittsweise einen im Wesentlichen bogenförmigen Verlauf aufweist.

10. Selbstfahrende Erntemaschine nach einem der vorherigen Ansprüche, **dadurch gekennzeichnet, dass** die Erntemaschine als Raupenmaschine ausgebildet ist, wobei das Schaltgetriebe (10) der der Fahrtrichtung abgewandten Stirnfläche des Achskörpers (22) zugeordnet ist.

11. Selbstfahrende Erntemaschine nach einem der vorherigen Ansprüche, **dadurch gekennzeichnet, dass** die in Fahrtrichtung weisende Stirnfläche des Achskörpers (22) mit der Vorderseite des Gehäuses (12) in vertikaler Richtung im Wesentlichen bündig abschließend angeordnet ist.

12. Selbstfahrende Erntemaschine nach einem der vorherigen Ansprüche, **dadurch gekennzeichnet, dass** der Achskörper (22) als ein Hohlkörper ausgebildet ist, der einen im Wesentlichen u-förmigen Verlauf aufweist.

13. Selbstfahrende Erntemaschine nach einem der vorherigen Ansprüche, **dadurch gekennzeichnet, dass** der Achskörper (2, 22) kraftflussoptimiert ausgeführt ist.

## Claims

1. A self-propelled harvesting machine, comprising a drive axle (1, 21) as well as a steering axle, wherein
the drive axle (1, 21) is disposed below a housing (12) which surrounds at least part of at least one working assembly of the harvesting machine, wherein longitudinal beams (3, 23) which extend in the longitudinal direction of the harvesting machine and which comprise a support surface (6, 26) are disposed on the axle body (2), with sections of the housing (12) being seated on said support surface (6, 26), and in that the housing (12) is almost flush with the ends of the longitudinal beams (3, 23) which face the direction of travel, **characterized in that** a respective retaining section (7, 27) which extends vertically to the support surface (6, 26) is disposed on each longitudinal beam (3, 23), on which retaining section a part of the housing (12) is seated, and the drive axle (1, 21) has a cranked axle body (2, 22).

2. The self-propelled harvesting machine according to claim 1, **characterized in that** the harvesting machine comprises drive components with at least portions thereof being into the crank of the axle body (2, 22).

3. The self-propelled harvesting machine according to one of the preceding claims, **characterized in that** the drive components comprise two hydraulic motors (11).

4. The self-propelled harvesting machine according to one of the preceding claims, **characterized in that** a gearbox (10), two hydraulic motors (11) and a differential (8) with two output shafts (9) are disposed on an end face of the axle body (2, 22), wherein the disposition of these drive components is selected in a manner such that when looked at in the direction of travel, the differential (8) with the two output shafts (9) is disposed first and is followed by the gearbox (10) and the two hydraulic motors (11).

5. The self-propelled harvesting machine according to one of the preceding claims, **characterized in that** the harvesting machine is configured as a wheeled machine, wherein the gearbox (10) is associated with the end face of the axle body (2, 22) facing the direction of travel.

6. The self-propelled harvesting machine according to one of the preceding claims, **characterized in that** the output shafts (9) which extend from the differential (8) to either side of the drive axle (1) are each connected to a wheel gear (4) which is located offset.

7. The self-propelled harvesting machine according to one of the preceding claims, **characterized in that** the respective output shaft (9) runs into the wheel gear (4) in a region below a centre of the wheel (RM).

8. The self-propelled harvesting machine according to one of the preceding claims, **characterized in that** the respective input shaft runs into the wheel gear (4) in a region in the shape of a circular segment which is below the centre of the wheel (RM).

9. The self-propelled harvesting machine according to one of the preceding claims, **characterized in that** the axle body (2) is configured as a hollow body with sections thereof having an essentially arcuate profile.

10. The self-propelled harvesting machine according to one of the preceding claims, **characterized in that** the harvesting machine is configured as a tracked machine, wherein the gearbox (10) is associated with the end face of the axle body (22) facing away from the direction of travel.

11. The self-propelled harvesting machine according to one of the preceding claims, **characterized in that** the end face of the axle body (22) facing the direction of travel is disposed so as to be essentially flush with the front side of the housing (12) in the vertical direction.

12. The self-propelled harvesting machine according to one of the preceding claims, **characterized in that** the axle body (22) is configured as a hollow body which has an essentially U-shaped profile.

13. The self-propelled harvesting machine according to one of the preceding claims, **characterized in that** the axle body (2, 22) is configured in a manner such as to optimise power transmission.

## Revendications

1. Machine de récolte automotrice comprenant un essieu moteur (1, 21) ainsi qu'un essieu directeur, l'essieu moteur (1, 21) étant disposé au-dessous d'un carter (12) entourant au moins par endroits un organe de travail de la machine de récolte, sur le corps d'essieu (2) étant disposés des supports longitudinaux (3, 23) qui s'étendent dans la direction longitudinale de la machine de récolte et comportent une surface d'appui (6, 26) et sur la surface d'appui (6, 26) desquels le carter (12) repose par endroits, et le carter (12) se terminant presque à ras des extrémités des supports longitudinaux (3, 23) orientées dans le sens de la marche, **caractérisée en ce que**, sur le support longitudinal (3, 23) respectif est disposée respectivement une portion de retenue (7, 27) qui s'étend verticalement par rapport à la surface d'appui (6, 26) et au niveau de laquelle le carter (12) est en appui par endroits et l'essieu moteur (1, 21) comporte un corps d'essieu coudé (2, 22).

2. Machine de récolte automotrice selon la revendication 1, **caractérisée en ce que** la machine de récolte comprend des composants d'entraînement qui sont engagés au moins par endroits dans la partie coudée du corps d'essieu (2, 22).

3. Machine de récolte automotrice selon une des revendications précédentes, **caractérisée en ce que** les composants d'entraînement comprennent deux moteurs hydrauliques (11).

4. Machine de récolte automotrice selon une des revendications précédentes, **caractérisée en ce que** sur une surface frontale du corps d'essieu (2, 22) est disposée une transmission (10), deux moteurs hydrauliques (11) et un différentiel (8) avec deux arbres de sortie (9), l'agencement de ces composants d'entraînement étant choisi de façon que, par rapport au sens de la marche, soient disposés d'abord le différentiel (8) avec les deux arbres de sortie (9) et, à sa suite, la transmission (10) et les deux moteurs hydrauliques (11).

5. Machine de récolte automotrice selon une des revendications précédentes, **caractérisée en ce que** la machine de récolte est conformée en machine à roues, la transmission (10) étant associée à la surface frontale du corps d'essieu (2, 22) orientée dans le sens de la marche.

6. Machine de récolte automotrice selon une des revendications précédentes, **caractérisé en ce que** les arbres de sortie (9) partant du différentiel (8) vers les deux côtés de l'essieu moteur (1) sont reliés respectivement à une transmission de roue disposée de façon coudée (4).

7. Machine de récolte automotrice selon une des revendications précédentes, **caractérisée en ce que** l'arbre de sortie respectif (9) débouche dans la transmission de roue (4) dans une zone située au-dessous d'un centre de roue (RM).

8. Machine de récolte automotrice selon une des revendications précédentes, **caractérisée en ce que** l'arbre d'entrée respectif débouche dans la transmission de roue (4) à l'intérieur d'une zone en forme de segment circulaire située au-dessous du centre de roue (RM).

9. Machine de récolte automotrice selon une des revendications précédentes, **caractérisée en ce que** le corps d'essieu (2) est conformé en corps creux qui, par endroits, présente un tracé sensiblement arqué.

10. Machine de récolte automotrice selon une des revendications précédentes, **caractérisée en ce que** la machine de récolte est conformée en machine à chenilles, la transmission (10) étant associée à la surface frontale du corps d'essieu (22) orientée à l'opposé du sens de la marche.

11. Machine de récolte automotrice selon une des revendications précédentes, **caractérisée en ce que** la surface frontale du corps d'essieu (22) orientée dans le sens de la marche est disposée, dans la direction verticale, sensiblement au ras du coté avant du carter (12).

12. Machine de récolte automotrice selon une des revendications précédentes, **caractérisée en ce que** le corps d'essieu (22) est conformé en corps creux qui présente un tracé sensiblement en forme de U.

13. Machine de récolte automotrice selon une des revendications précédentes, **caractérisée en ce que** le corps d'essieu (2, 22) est conformé avec un flux de forces optimisé.
